# EUROPEAN PATENT APPLICATION

(11) **EP 4 647 862 A1**
(43) Date of publication of application: **12.11.2025**
(21) Application number: 25173524.7
(22) Date of filing: 30.04.2025
(51) Int. Cl.: G05D 1/227, G05D 1/224, G05D 1/622, G05D 105/22, G05D 107/13, G05D 109/10

(54) **TRAJECTORY PLANNING AFTER INTERRUPTED VEHICLE TELEOPERATION**

(30) Priority: 08.05.2024 DE 102024204351
(71) Applicant: Stellantis Auto SAS, 78300 Poissy (FR)
(72) Inventor: BICKEL, Markus, 65428 Rüsselsheim am Main (DE); BONARENS, Frank, 65428 Rüsselsheim am Main (DE)
(74) Representative: ESIP

(57) **Abstract**

The invention relates to a method for securing a teleoperated vehicle operation, wherein a teleoperated vehicle (1) is controlled by a vehicle operator in a stationary control stand (3) through vehicle operation by means of radio remote control and wherein by a processing unit of the stationary control stand (3) an updated optimal path for the vehicle (1) is continuously determined for the case of a disruption of the radio remote control and transmitted to the vehicle (1), and the optimal path takes place based on environmental data currently determined by the vehicle (1) in each case and transmitted to the processing unit at least up to the disruption, wherein the environmental data are used for determining a collision-free optimal path, and wherein the vehicle operation is taken over by the vehicle (1) upon disruption of the radio remote control and a following of the last optimal path still transmitted to the vehicle (1) is initiated.

## Description

The invention relates to a method for securing a teleoperated vehicle operation and to a system for securing a teleoperated vehicle operation.

Typical conventional motor vehicles such as passenger cars are designed for the vehicle operation of the same taking place by a person present in the vehicle. With increasing degree of automation, the role of this person increasingly changes from a vehicle operator for active vehicle operation to the sole object of monitoring the driving manoeuvres and steering interventions carried out independently by the vehicle. Completely automated vehicles, which cannot only carry out individual manoeuvres but travel an entire planned route autonomously, are at the forefront of this development. While a human vehicle operator in a non-automated vehicle is the sole decision-making organ of the vehicle, he also assumes the role of actuators at least in parts, when through his movements control variables are mechanically predetermined (with direct support at the most). However, with increasing degree of automation of vehicles actuators have to be provided, for example electrical or hydraulic actuators, which are controlled by control electronics so that a computer of the vehicle can transmit relevant commands to the actuators, which are then mechanically realised by these. This circumstance allows controlling an interface on a digital control unit or directly on the actuators of the vehicle for vehicle operation from an external control room. This opens up the possibility of a teleoperation of the automated vehicle in which a human vehicle operator of the vehicle need not have to be seated in the vehicle itself, but can sit at a stationary workstation outside the vehicle and specify commands to this interface of the vehicle which by data transmission are transmitted to the vehicle for execution, in particular wirelessly. In addition, relevant vehicle information (for example, a video stream with images recorded from a first-person perspective, for example, from the driver's seat of the vehicle) can be transmitted to the remotely controlling vehicle operator. When the teleoperation takes place in an environment with further road users, the human vehicle operator, by detecting the local surroundings of the vehicle and further road users present therein, can initiate necessary vehicle movements (through lateral/longitudinal control) for avoiding traffic obstructions and hazardous situations for reaching a target destination.

In this connection, DE10 2021 123 234 A1 relates to a teleoperating vehicle operator workstation for a teleoperated motor vehicle, wherein the motor vehicle comprises a front camera, a rear camera, a left side camera, which is optionally aimed at a rear left side of the motor vehicle, and a right side camera, which is optionally aimed at a rear right side of the motor vehicle, and wherein the motor vehicle is configured for sending images, each recorded by the front camera, the rear camera, and the left and the right side camera, to the teleoperating vehicle operator workstation, wherein the teleoperating vehicle operator workstation is configured for changing a display of images received from the motor vehicle dependent on an orientation of a head of a teleoperating vehicle operator and/or depending on a viewing direction of the teleoperating vehicle operator.

Further, DE10 2021 209 065 A1 relates to a method for operating a vehicle control system for at least partly remote-controlling a vehicle, including the following steps: receiving operating data from the vehicle generated or detected by the vehicle, determining at least one trajectory for a route to be travelled by the vehicle taking into account at least one part of the received operating data, assigning the at least one trajectory to one or more connection nodes along the route to be travelled, and transmitting the at least one trajectory to the one or the multiple connection nodes.

With such a teleoperated vehicle operation there is naturally a risk of a communication interruption or of a complete communication failure between a stationary control stand and the teleoperated vehicle. A generally possible remedial measure in such a situation, provided no human driver is available in person for taking over the vehicle operation in a previously teleoperated vehicle, consists in the automated carrying out of a so-called "minimal risk manoeuvre" by the teleoperated vehicle, in particular a hard braking of the vehicle to a standstill. However, this manoeuvre holds the risk of a rear-end collision of a following vehicle. An automatic evasive manoeuvre alternatively or additionally to the braking involves further risks and major technical expenditure. Upon a failure of communication between the stationary control stand and the teleoperated vehicle which for the following traffic upon high braking deceleration generally happens as a surprise and brings with it a high risk of rear-end collisions, there is thus practically no safe alternative to emergency brake application. Furthermore, this has a negative effect on the travelling comfort and thus the user acceptance of a possible passenger.

A system for the automated driving in the vehicle teleoperated up to the communication interruption constitutes a technically conceivable solution, but involves huge expenditure and requires use of pre-trained models of machine learning. Because of national and international legal conditions and present standards, introducing such automatic vehicle operations (in particular SAE Level 4), in particular when used in urban space, requires major expenditure. The methods for securing perception functions for an open world context without significant restriction of the operational design domain are not fully developed in the entirety.

EP4 050 450 A1 in this regard relates to a method for performing a remotely controlled drive of a vehicle, which is equipped with an automatic driving function, wherein the method includes the following: analysing a predictive quality of a communication between the vehicle and a control stand for a route which is travelled in a teleoperated vehicle operation; determining a route section for which an indirect control is to be employed; determining the control data which are to be used by the vehicle on the determined route section; and sending at least the control data to the vehicle before or after the start of a teleoperated vehicle operation with direct control over the vehicle.

The object of the invention is to transfer a vehicle with teleoperated vehicle operation terminated because of a communication break-up between a stationary control stand and the vehicle without employing a method of machine learning in automatic vehicle operation by the vehicle itself into a safe state and without initiating a manoeuvre with high brake decelerations that is critical for the following traffic and without requiring a highly precise digital map in the vehicle for this purpose.

The invention is obtained from the features of the independent claims. Advantageous further developments and configurations are subject of the dependent claims.

A first aspect of the invention relates to a method for securing a teleoperated vehicle operation, wherein a teleoperated vehicle is controlled by a vehicle operator in a stationary control stand by vehicle operation by means of radio remote control, and wherein via a processing unit of the stationary control stand an updated optimal path for the vehicle for the case of a break-up of the radio remote control is continuously determined and transmitted to the vehicle and the optimal path takes place based on environmental data transmitted to the processing unit at least up to the break-up, wherein the environmental data are used for determining a collision-free optimal path and wherein the vehicle operation is taken over by the vehicle upon break-up of the radio remote control and a following of the last optimal path still transmitted to the vehicle is initiated. The environmental data are obtained by one or more sensors in the vehicle for detecting surroundings of the vehicle, in particular through a LiDAR system. Alternatively, each sensor which makes possible recognising a free manoeuvre region can be employed. Preferably, via conventional processing methods of LiDAR data, it can be determined whether and where there is collision freedom for a trajectory. Detected elevations which are relevant for the drive planning to avoid collisions restrict this manoeuvre space. The analysis of the environment data takes place continuously, i.e. updated continuously, both in the stationary control stand and also in the vehicle at least after the break-up of the radio remote control. An elevation from the road surface is determined via the evaluation of the detections in the sensor data preferably in a certain angular section. Detections located next to one another can be combined with classical methods (for example, similar to the blob detection method for pixels of a class in an image) to an elevation (person, object, road element). The manual establishment of threshold values for a minimum number of detections and for the minimum height of the detections for preventing incorrect detections supports the robustness of the calculation. Therein, the minimum height is geometrically calculated to a virtual road height. A further practical measure is the enlargement of an elevation by a safety margin.

The stationary control stand for the teleoperation continuously transmits an optimal path to the vehicle. The optimal path is calculated so that the same is within a provided computer-calculated path and is preferably optimised so that the distance to road edges is maximised. The computer-calculated path in turn is determined from the stationary control stand preferably with the help of a digital map along a specified navigation route on the lane travelled on. Utilising a high-resolution map offers advantages, but is not an absolute prerequisite. The remaining computer-calculated path is delimited through superimposition on the determined, current, collision-free manoeuvring space. The computer-calculated path preferably has a finite length. The limit either is obtained from the detected elevations or the same is determined by a manually determined maximum distance based on technical safety considerations. This remaining computer-calculated path is utilised for calculating the optimal path. The optimal path is calculated from the stationary control stand by means of environmental data transmitted from the vehicle by superimposing the free manoeuvre space on the map-based computer-calculated path.

The purpose of determining the optimal path in the stationary control stand is utilising information from a digital map in the stationary control stand maintained as current as possible, so that in the vehicle no such digital map has to be present. The optimal path in the stationary control stand, continuously updated, is determined so that the vehicle on taking up the optimal path can perform a moderate trajectory following the break-up of the communication connection between the stationary control stand and the vehicle without having to immediately initiate an emergency stop. For this purpose, the optimal path is not only determined by the stationary control stand, but also transmitted from the stationary control stand to the vehicle with as short as possible a time delay. In the vehicle, a respective optimal path received most recent is stored at least temporarily. Upon receipt of a new optimal path, the preceding one can be discarded. However, when the communication is interrupted, the latest obtained optimal path is used in order to serve as first target trajectory for the vehicle. Further target trajectories are determined on this basis and on the basis of each environmental data subsequently obtained from a sensor unit of the vehicle, in order to make possible the moderate taking up of a safe state of the vehicle, preferably free of collision, without directly risking a rear-end collision of a following road user because of emergency brake application of one's own vehicle. Insofar, the vehicle operation is passed on from the stationary control stand to the vehicle itself for the case of a communication break-up between the stationary control stand and the vehicle, but at least initially information of the stationary control stand is still utilised in that the latest and thus last still-received optimal path is utilised in order to be able to continue the vehicle operation by the vehicle directly after the communications break-up at least for a certain period of time. During a further course of the vehicle operation by the vehicle itself, new environmental information is continuously checked for a possible collision with an object. For example, LiDAR images and/or camera images are evaluated in order to be able to determine a collision-free trajectory. The verification for collision freedom takes place highly frequently in a continuously repeated manner, preferably by conventional image processing methods in order to be able to adjust the trajectory for the case that collision freedom is no longer present. The respective selected trajectory is then converted into control commands for the actuators of the vehicle.

Advantageously, the storage and updating of high-resolution maps in the vehicle can thus be omitted. Apart from this, neither a safety driver nor a passenger prepared for taking over the driving duties is assumed. The method supports the safe takeover of the driving task by the vehicle upon a communication interruption during the teleoperated driving. For the case of an interruption it also makes a safety contribution for protecting other road users, including vulnerable road users, and can avoid departing from the lane. Furthermore, the risk of a rear-end collision is reduced and as side effect a possible impairment of comfort of passengers reduced. Waiving automation with Al methods brings with it a substantial reduction of the development expenditure with correspondingly reduced system costs and an expenditure reduction in the safety certification. Merely a sensor such as a LiDAR system on the vehicle is required for producing current environmental data.

Additionally advantageous is dividing the driving task between the stationary control stand and the vehicle in the event of a fault. The (high-resolution) digital map is only required in the stationary control stand and has to be only updated there. The optimal path is provided by the stationary control stand so that the processing effort in the vehicle is reduced. A further advantage is the continuing new selection of the trajectory as a result of which temporary mis-detections of elevation or objects upon vehicle operation by the vehicle itself can also be reduced in their effect. Furthermore, poor weather conditions, for example, can be excluded for the safety argumentation by determinations to disable the teleoperations mode beforehand.

According to an advantageous embodiment, the vehicle operation by the vehicle is terminated when a standstill of the vehicle occurs or the radio remote control by the stationary control stand is resumed.

According to a further advantageous embodiment, it is continuously checked by the vehicle even after break-up of the radio remote control on the basis of currently detected environmental data in each case whether the optimal path is collision-free.

According to a further advantageous embodiment, an updated target trajectory is continuously determined based on the optimal path as initial target trajectory in the vehicle based on currently detected environmental data in each case, each currently assumed target trajectory checked for collision freedom based on the environmental data and with each further failure of the demand for collision freedom, the vehicle operation transferred in steps to a further safety category specified out of a multiplicity.

According to a further advantageous embodiment, the safety categories include:
- a continued constant drive with comfort brake application;
- a comfort brake application;
- an emergency brake application;

The safety categories are divided in particular into trajectory sets, each of which is assigned a certain priority number. These are then carried out in descending order in steps according to the key priority figures. Preferably, a set of three trajectories with their following priorities is provided:
- first trajectory for continued constant drive with comfort brake application with priority figure one,
- second trajectory for comfort brake application with priority figure two (e.g. 3 m/s²) and
- third trajectory for emergency brake application (e.g. 9 m/s²) with priority figure 3.

The lengths and duration of the trajectories decrease in particular with increasing priority figure. The duration of the constant drive is preferably limited to a preselected value, e.g. 2 seconds. The method can be expanded by additional trajectories as desired.

According to a further advantageous embodiment, collision freedom is determined when no detected elevation from the road surface exceeds a specified limit condition. According to a further advantageous embodiment, the environmental data are determined via a camera unit of the vehicle and/or a LiDAR unit of the vehicle. According to a further advantageous embodiment, the optimal path is determined based on map data available in the processing unit.

A further aspect of the invention relates to a system for securing a teleoperated vehicle operation, comprising a stationary control stand and a teleoperated vehicle, wherein the stationary control stand serves for a vehicle operator performs a vehicle operation from there by radio remote control of the vehicle, wherein a processing unit of the stationary control stand is embodied to continuously determine and transmit to the vehicle an updated optimal path for the vehicle for the case of a break-up of the radio remote control and generate the optimal path based on environmental data currently determined by the vehicle and transmitted by the vehicle to the processing unit at least up to the break-up in order to use environmental data for determining a collision-free optimal path and wherein the vehicle is embodied for taking over the vehicle operation upon break-up of the radio remote control and initiate a following of the last optimal path still transmitted to the vehicle.

According to a further advantageous embodiment, the vehicle is embodied to continuously determine an updated target trajectory based on the optimal path as initial target trajectory based on currently detected environmental data in each case, to check each currently assumed target trajectory for collision freedom based on the environmental data determined by a sensor unit of the vehicle and with each further failure of the demand for collision freedom, transfer the vehicle operation in steps to a further of a multiplicity of specified safety categories.

Advantages and preferred further developments of the proposed system are obtained by analogously transferring the explanations given above in connection with the proposed method.

Further advantages, features and details are obtained from the following description in which - if applicable making reference to the drawing - at least one exemplary embodiment is described in detail.

It shows,
- Fig. 1:: a stationary control stand for the teleoperated vehicle operation according to an exemplary embodiment of the invention.
- Fig. 2:: a situation in the event of a fault in a system with a stationary control stand according to Fig. 1, in accordance with an exemplary embodiment of the invention.

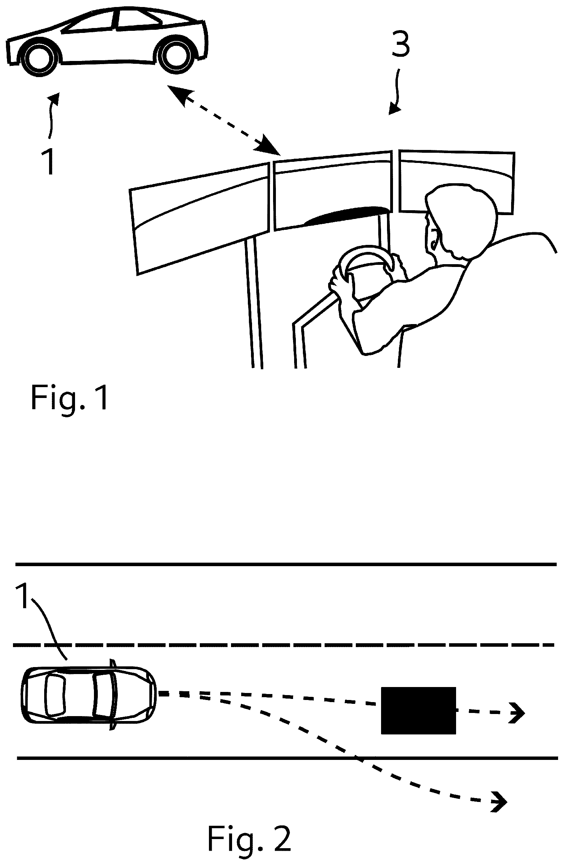

Fig. 1 shows a stationary control stand 3 in a teleoperation control room. The driver of the vehicle 1, which carries out the teleoperated vehicle operation, is geographically far away from the vehicle 1. In its control stand 3, the driver is provided with the control elements typical for a passenger car, in particular pedals, steering wheel, etc.; on a monitor in front of him, a camera image from a vehicle camera is transmitted to him in almost real time. Apart from latencies in the signal transmission and the missing accelerations acting on his body, the driver of the first vehicle 1 feels as if he were sitting in the same himself and manually operating the same on location. The input commands performed on his control stand, such as actuating the steering wheel or pedals, are wirelessly transmitted to the first vehicle 1, which physically implements these commands. The transmission of the control commands from the control stand 3 to the vehicle 1 and the transmission of the video data flow from the vehicle 1 to the stationary control stand 3 take place by-directionally, for example, via mobile radio, e.g. according to LTE or the 5G standard. For as long as the communication between the vehicle 1 and the stationary control stand 3 is maintained, the video stream from the vehicle 1 to the control stand 3 and the control commands from the control stand 3 to the vehicle 1 are transmitted for this manual vehicle operation. Since, however, for technical safety reasons it has to be assumed that the communication connection in at least one communication direction (vehicle 1 to control stand 3 or vice versa) can be interrupted or broken because of a technical defect or shadowing of the radio signals, a set of environmental data additionally updated continuously from the vehicle 1 is transmitted to the control stand 3. A processing unit in the stationary control stand 3 (or at least connected to the stationary control stand 3) determines, based on these environmental data, for as long as these are received, a respectively associated optimal path for the vehicle 1 as approach for a further automatic vehicle operation by the vehicle 1 itself when the communication in at least one direction between vehicle 1 and control stand 3 is interrupted. In order to interrupt or break up the radio remote control it is sufficient, for example, that the video data stream from the vehicle 1 to the control stand 3 is broken, so that the vehicle operator in the control stand 3 cannot continue any manual operation. Upon the break-up of the communication from the control stand 3 to the vehicle 1, the vehicle 1 assumes the vehicle operation based on the optimal path. For this purpose, the vehicle 1 comprises a LiDAR unit with the help of the data of which a three-dimensional environmental model can be determined. By analysing the environmental model, spatial data can be obtained and from this a collision freedom of a planned trajectory of the vehicle 1 determined. The processing capacity of the processing unit of the stationary control stand 3 is utilised for this purpose in order to calculate and transmit to the vehicle 1 such an optimal path as current as possible based on current environmental data of the vehicle 1.

Fig. 2 shows a vehicle 1 in the situation as described in Fig. 1, in which a communication malfunction occurs. For example, by way of a handshake system, a communication malfunction can be determined via parity bits upon absence of the message or missing confirmation or defects in the data. Depending on the transmission rate and speed, determining the communication malfunction can also take place only with more than one scanning step for initiating the takeover of the vehicle operation by the vehicle 1 for the case of a malfunction. Thanks to the optimal paths at least transmitted up to the communication malfunction current in each case from the stationary control stand 3 to the vehicle 1, an optimal path promptly calculated in advance is available to the vehicle 1 directly after the break-up of the communication. At least from this time on, collision freedom is checked by the vehicle 1 itself based on the environmental data and a trajectory initially based on the optimal path adapted dependent on a safety category defined in steps. In descending priority order, these safety categories are a continued constant drive with comfort brake application; a comfort brake application; and an emergency brake application; this means that the vehicle operation carried out by the vehicle 1 itself is inclined to initially continue its drive with an pre-planned trajectory, when in this trajectory an obstacle is determined based on the environmental data, to execute a gentle brake application, and only when this plan in turn, because of an obstacle detected in the environmental data and impending collision, is rejected, to execute an emergency brake application. Thus, the risk of a rear-end collision by a following road user on the vehicle 1 is minimised. Fig. 2 shows an example in this regard in which a planned trajectory is assumed, but an obstacle is detected thereon, so that a new trajectory has to be assumed which results in a faster braking of the vehicle 1.

Although the invention was illustrated and explained by preferred exemplary embodiments in detail, the invention is not restricted by the disclosed examples and other variations can be derived by the person skilled in the art from this without leaving the protective scope of the invention. It is therefore clear that a multiplicity of possible variations exist. It is likewise clear that exemplarily mentioned embodiments really constitute only examples, which must not be assumed in any way as limitation, for example, of the scope of protection, of the application possibilities or the configuration of the invention. The preceding description and the figure description rather enable the person skilled in the art to specifically realise the exemplary embodiments, wherein the person skilled in the art knowing the disclosed inventive idea can carry out manifold changes, for example, with respect to the function or the arrangement of individual elements mentioned in an exemplary embodiment without leaving the scope of protection as defined by the claims and their legal equivalents, such as for example, further explanations in the description.

## Claims

1. A method for securing a teleoperated vehicle operation, wherein a teleoperated vehicle (1) is controlled by a vehicle operator in a stationary control stand (3) through vehicle operation by means of radio remote control, and wherein by a processing unit of the stationary control stand (3) an updated optimal path for the vehicle (1) for the case of a disruption of the radio remote control is continuously determined and transmitted to the vehicle (1) and the optimal path takes place based on environmental data determined by the vehicle (1) currently in each case and transmitted to the processing unit at least up to the disruption, wherein the environmental data are used for determining a collision-free optimal path, and wherein the vehicle operation is taken over by the vehicle (1) upon disruption of the radio remote control and a following of the last optimal path still transmitted to the vehicle (1) is initiated.

2. The method according to claim 1,
wherein the vehicle operation by the vehicle (1) is terminated when a standstill of the vehicle (1) occurs, or the radio remote control is again resumed by the stationary control stand (3).

3. The method according to any one of the preceding claims,
wherein it is continuously checked by the vehicle (1) even after disruption of the radio remote control based on environmental data currently detected in each case if the optimal path is collision-free.

4. The method according to claim 3,
wherein based on the optimal path as initial target trajectory an updated target trajectory is continuously determined in the vehicle (1) based on environmental data currently detected in each case, each currently assumed target trajectory is checked for collision freedom based on the environmental data and with each further failure of the request for collision freedom, the vehicle operation is transferred in steps to a further of a multiplicity of specified safety categories.

5. The method according to claim 4,
wherein the safety categories include:
- a continued constant drive with comfort brake application;
- a comfort brake application;
- an emergency brake application;

6. The method according to any one of the preceding claims,
wherein collision freedom is determined when no detected elevation from the road surface exceeds a specified limit condition.

7. The method according to any one of the preceding claims,
wherein the environmental data are determined via a camera unit of the vehicle (1) and/or LiDAR unit of the vehicle (1).

8. The method according to any one of the preceding claims,
wherein the optimal path is determined based on map data available in the processing unit.

9. A system for securing a teleoperated vehicle operation, comprising a stationary control stand (3) and a teleoperated vehicle, wherein the stationary control stand (3) serves for a vehicle operator carrying out a vehicle operation by radio remote control of the vehicle (1) from the same, wherein a processing unit of the stationary control stand (3) is embodied for continuously determining and transmitting to the vehicle (1) an updated optimal path for the vehicle (1) for the case of a disruption of the radio remote control and generate the optimal path based on environmental data currently determined by the vehicle (1) and transmitted from the vehicle (1) to the processing unit at least up to the disruption, in order to use the environmental data for determining a collision-free optimal path, and wherein the vehicle (1) is embodied for taking over the vehicle operation upon disruption of the radio remote control and initiate a following of the last optimal path still transmitted to the vehicle (1).

10. The system according to claim 9,
wherein the vehicle (1) is embodied, based on the optimal path as initial target trajectory, to continuously determine an updated target trajectory based on currently detected environmental data in each case, check each currently assumed target trajectory for collision freedom based on the environmental data determined by a sensor unit of the vehicle and with each further failure of the request for collision freedom, transfer the vehicle operation in steps to a further of a multiplicity of specified safety categories.
